# EUROPÄISCHE PATENTSCHRIFT

(11) **EP 0 752 364 B1**
(45) Veröffentlichungstag und Bekanntmachung des Hinweises auf die Patenterteilung: **17.03.1999**
(21) Anmeldenummer: 96107176.8
(22) Anmeldetag: 07.05.1996
(51) Int. Cl.: B62D 25/16

(54) **Kotflügel für ein Fahrzeug, insbesondere einen Lastkraftwagen**
Mudguard for a vehicle, especially a load-carrying vehicle
Garde-boue pour un véhicule, en particulier un véhicule à marchandises

(30) Priorität: 05.07.1995 DE 29510868 U
(43) Veröffentlichungstag der Anmeldung: 08.01.1997
(73) Patentinhaber: Sauermann, Hans, D-86558 Freinhausen (DE)
(72) Erfinder: Sauermann, Hans, D-86558 Freinhausen (DE)
(74) Vertreter: Sasse, Volker, Dipl.-Ing.

(56) Entgegenhaltungen:
- EP-A- 0 088 324
- EP-A- 0 138 233
- DE-U- 8 417 557
- DE-U- 8 708 265
- FR-A- 2 440 306

## Beschreibung

Die Erfindung betrifft einen Kotflügel gemaß dem Oberbegriff des Patentanspruchs 1.

Ein derartiger Kotflügel ist aus dem DE-GM 84 17 557 bekannt. Dieser Kotflügel weist eine an seine Krümmung angepaßte Befestigungsleiste auf, die mit einer T-förmigen Nut versehen ist. Diese Befestigungsleiste dient zur Aufnahme einer Spezialmutter, die wiederum eine Klemmschelle tragt. Mit Hilfe dieser Klemmschelle läßt sich der Kotflügel an einer Stange oder einem Rohr, die zu diesem Zweck üblicherweise am Rahmen des Lastkraftwagens vorgesehen ist, festlegen. Dabei kann die Kiemmschelle mit Hilfe der in der T-Nut verschiebbar geführten Spezialmuttern an die jeweiligen Erfordernisse des Lastkraftwagens angepaßt werden. Dieser bekannte Kotflügel weist jedoch den Nachteil auf, daß seine Herstellung sehr kostenintensiv ist. Um den auftretenden Haltekräften standzuhalten, ist der Kotflügel im Bereich der Befestigungsleiste mit Stahl armiert, wobei die Befestigungsleiste großflächig mit dem Kotflügel verbunden werden muß. Anderenfalls besteht die Gefahr, daß die Befestigungsleiste vom Kotflügel abgerissen wird. Die Herstellung dieses Kotflügels ist daher sehr teuer, so daß Kotflügel mit Befestigungselementen, welche für einen bestimmten Fahrzeugtyp zugeschnitten sind, aus Kostengründen vorgezogen werden.

Der Erfindung liegt die Aufgabe zugrunde, einen Kotflügel der eingangs genannten Art zu schaffen, der bei hoher Haltbarkeit preisgünstig herstellbar und nach dem EinSatz leicht wiederverwertbar ist.

Die gestellte Aufgabe wird erfindungsgemäß mit den Merkmalen des kennzeichnenden Teils des Patentanspruchs 1 gelöst.

Da der Kotflügel und die Stege aus gleichem Material bestehen, laßt sich der Kotflügel nach seinem Gebrauch sehr einfach zu Kunststoffgranulat verarbeiten, so daß sich das Kotflügelmaterial ohne großen Aufwand wiederverwerten läßt. Der Kotflügel muß hierzu nicht erst von Metallarmierungen befreit werden, was nur in mühevoller Handarbeit zu bewerkstelligen ist. Von einer kostenintensiven Entsorgung auf Mülldeponien oder gar einer Verbrennung des Kotflügels, die aufgrund der entstehenden toxischen Gase problematisch ist, kann daher abgesehen werden. Spannungsrisse als Folge unterschiedlicher Wärmeausdehnungskoeffizienten von Kunststoff und Metall können bei diesem Kotflügel nicht auftreten, so daß er sich durch eine überraschende Langzeitbeständigkeit auszeichnet. Ein einstückiges Erstellen des Kotflügels und der Stege erlaubt eine sehr kostengünstige Produktion, da der gesamte Kotflügel im wesentlichen in einem Arbeitsgang fertiggestellt werden kann. Insbesondere können Arbeitsschritte wie Verkleben oder Verschweißen der einzelnen Teile und eine anschließende Überprüfung der Verbindungsstelle entfallen. Dieser für verschiedene Fahrzeugtypen anpaßbare Kotflügel ist daher in seinen Herstellungskosten einem auf einen bestimmten Fahrzeugtyp abgestellen Kotflügel durchaus gleichgestellt. Als Folge der Typunabhängigkeit des neuerungsgemäßen Kotflügels läßt sich dieser aber in höheren Stückzahlen fertigen, was dann zu Preisvorteilen gegenüber einem auf einen bestimmten Fahrzeugtyp abgestellten Kotflügel führt. Eine doppelwandige Ausbildung der Stege gewährleistet auf überraschend einfache Weise, daß der Kotflügel samt den Stegen über die gesamte Breite annähernd gleiche elastische Eigenschaften aufweist. Werden auf den Kotflügel bei der Fahrt Schwingungen oder Stöße übertragen, so breiten sich diese über den gesamten Kotflügel annähernd gleichmäßig aus. Da die Stege für den Kotflügel keine Versteifung darstellen, werden diese aufgrund der Deformationen nicht stärker belastet als der übrige Kotflügel. Vorzugsweise sind die Stege derart ausgebildet, daß der von ihnen eingeschlossene Raum mit dem Kotflügel-Innenraum verbunden ist. Dies gewährleistet nicht nur optimale elastische Eigenschaften des Kotflügels, sondern erlaubt darüber hinaus auch eine einfache Herstellung im Spritzgußverfahren, da sich in diesem Fall das Ziehen von Kernen vereinfacht oder sogar erübrigt

Gehen die Stege, wie in Anspruch 2 vorgeschlagen, mit gerundeten Übergängen in den Kotflügel über, so werden die vom Kupplungsglied auf die Stege übertragenen Haltekräfte gleichmäßig auf den Kotflügel übertragen. Es ergeben sich an keiner Stelle Spannungsüberhöhungen, die zu Rißbildungen führen können. Hieraus resultiert ein besonders sicherer Halt des Kotflügels am Fahrzeug.

Wichtig sind auch die Merkmale des Anspruchs 3, da in diesem Fall am Kotflügel innenseitig keine vorstehenden Stege vorgesehen sein müssen, so daß der Kotflügel mit geringstmöglichen Abstand zum Rad montiert werden kann. Der Kotflügel kann daher seine optimale Wirkung entfalten.

Alternativ ist es gemäß Anspruch 4 vorteilhaft, die Stege so auszubilden, daß deren Wände einen Hohlraum einschließen. Die Innenseite des Kotflügels kann daher im Bereich der Stege - im Querschnitt gesehen - eben ausgebildet sein, so daß sich kein Schmutz in den Hohlräumen ansammeln kann. Der Kotflügel wird in diesem Fall vorzugsweise durch Extrudieren hergestellt, wobei sich dann die Stege über den gesamten Kotflügelumfang erstrecken.

Ferner ist es günstig, gemäß Anspruch 5 den Kotflügel und die Stege mit annähernd gleicher Wandstärke auszubilden. Dies gewährleistet, über den gesamten Kotflügel gesehen, konstante elastische Eigenschaften. Außerdem laßt sich der Kotflügel besonders spannungsarm herstellen, da sich die einzelnen Teile des Kotflügels mit annähernd gleicher Rate abkühlen. Es entstehen daher beim Abkühlen keine größeren Temperaturgefalle, die zu inneren Verspannungen und im späteren Einsatz zu Brüchen führen können.

Schließlich läßt sich der Kotflügel besonders kostengünstig nach dem Drehgießverfahren herstellen, wenn die Merkmale des Anspruchs 6 genutzt werden.

Anhand der Zeichnung werden bevorzugte Ausführungsformen des Erfindungsgegenstandes beispielhaft erläutert.

Es zeigen:
- Figur 1: eine perspektivische Darstellung eines neuerungsgemäßen Kotflügels,
- Figur 2: einen Querschnitt entlang der Schnittfläche II-II aus Figur 2 und
- Figur 3: eine Schnittdarstellung einer zweiten Ausführungsform.

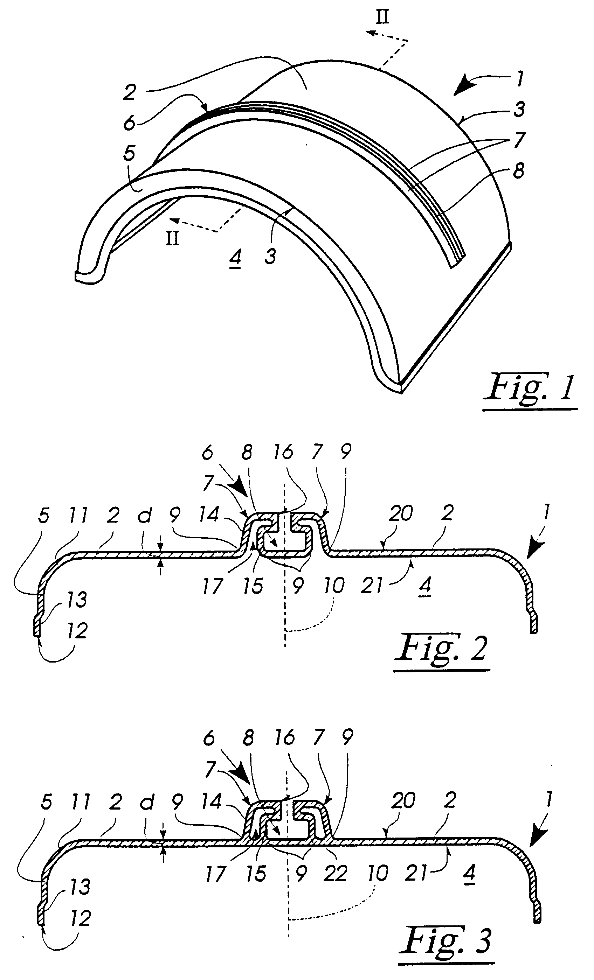

Ein Kotflügel 1 aus Kunststoff, vorzugsweise Polyethylen, Polyuretan oder Polyvinylchlorid gemäß Figur 1 besteht aus einer um etwa 180° zylindrisch gewölbten Fläche 2, die an ihren Seitenbereichen 3 zum Radraum 4 gezogene Flächen 5 aufweist. In der Mitte der gewölbten Fläche 2 weist der Kotflügel 1 ein einstückig angeformtes Befestigungsmittel 6 auf, das von zwei Stegen 7 gebildet ist, die eine Nut 8 einschließen. Diese Nut 8 dient zur Festlegung eines nicht dargestellten Kupplungsglieds, mit dem der Kotflügel 1 am Rahmen oder an der Karosserie eines Fahrzeugs festlegbar ist. Die Stege 7 erstrecken sich fast über den gesamten Umfang der gewölbten Fläche 2 des Kotflügels 1. Dies ermöglicht eine Verstellung des Kupplungsglieds über einen großen Winkelbereich, so daß die Lage des Kupplungsglieds in weiten Grenzen an die Erfordernisse verschiedener Fabrzeugtypen angepaßt werden kann. Alternativ könnten an der gekrümmten Fläche 2 auch mehrere Stege 7 hintereinander vorgesehen sein, so daß das Kupplungsglied nur in einem beschränkten Winkelbereich verstellbar ist. Dies erlaubt eine Einsparung von Kunststoffmaterial, so daß sich der Kotflügel insgesamt preisgünstiger herstellen läßt. Es ist jedoch auch vorstellbar, daß sich die Stege 7 über den gesamten Umfang der gekrümmten Fläche 2 erstrecken. In diesem Fall läßt sich der Kotflügel sehr einfach durch Extrudieren herstellen.

Figur 2 zeigt eine Schnittdarstellung entlang der Linie II-II aus Figur 1. Der besseren Übersicht wegen ist die Schnittfläche und nicht der geschnittene Körper dargestellt. Der Kotflügel 1 ist zur Achse 10 spiegelsymmetrisch ausgebildet. Die gewölbte Fläche 2 erstreckt sich links und rechts von den Stegen 7. An den äußeren Enden der gewölbten Fläche 2 schließen sich die nach innen gezogenen Flächen 5 mit einem dazwischenliegenden gekrümmten Bereich 11 an. Am freien Ende 12 der nach innen gezogenen Flächen 5 besitzt diese eine außenseitige Wulst 13, die für eine gute Verwirbelung der am Kotflügel 1 entlangstreichenden Luft sorgt. Dies bewirkt, daß sich kein Schmutz am freien Ende 12 der nach innen gezogenen Flächen 5 absetzen kann. Das Befestigungsmittel 6 wird von den beiden Stegen 7 gebildet, die die T-förmige Nut 8 einschließen. Die Stege 7 sind mit gerundeten Übergängen 9 an die gewölbte Fläche 2 des Kotflügels 1 einstückig angeformt. Die Stege 7 sind doppelwandig ausgebildet, wobei die Wände 14, 15 am freien Ende 16 des Steges 7 ineinander übergehen. Zwischen den Wänden 14, 15 befindet sich ein Raum 17, der unterseitig mit dem Radraum 4 verbunden ist. Der gesamte Kotflügel 1 besitzt einschließlich der Wände 14, 15 der Stege 7 eine konstante Wandstärke d, die im Bereich zwischen 3 und 10 mm, vorzugsweise um 5 mm, liegt. Der Kotflügel 1 hat dadurch eine über seine ganze Breite gesehen gleiche Elastizität, so daß die Stege 7 bei Stößen oder Schwingungen des Kotflügels 1 gegenüber der gewölbten Fläche 2 keine Mehrbelastung aufnehmen müssen.

Der Kotflügel 1 gemäß Figur 2 ist vorzugsweise nach dem Drehgießverfahren hergestellt, bei dem eine der Außenseite 20 des Kotflügels 1 angepaßte Form verwendet wird. Diese Form wird auf eine Temperatur aufgeheizt, die über dem sog. Gelierpunkt des eingesetzten Kunststoffs liegt. Die Form wird mit einem Kunststoffpulver teilweise gefüllt und im heißen Zustand um zueinander nicht parallele Achsen gedreht. Das Pulver haftet an der heißen Form an und geliert zu einer homogenen Kunststoffhaut mit annähernd konstanter Wandstärke d. Dieses Verfahren hat den Vorteil, daß keine der Innenseite 21 entsprechende Form hergestellt werden muß, und der Kotflügel 1 aus der Form auch leicht entnommen werden kann.

Figur 3 zeigt eine alternative Ausführungsform des Kotflügels 1, wobei gleiche Bezugszeichen gleiche Teile bedeuten. In dieser Ausführungsform sind die Räume 17 unterseitig mit Stegen 22 abgedeckt, so daß an der Innenseite 21 des Kotflügels 1 eine im Querschnitt betrachtet ebene Fläche vorliegt. Die Räume 17 der Stege 7 bilden daher geschlossene Hohlräume. Dies verhindert eine Ansammlung von Schmutz in den Räumen 17. Dieser Kotflügel wird vorzugsweise durch Extrudieren hergestellt, da in diesem Fall die Schafftung der Hohlräume 17 fertigungstechnisch einfach zu bewältigen ist.

## Patentansprüche

1. Kotflügel aus Kunststoff für ein Fahrzeug, insbesondere einen Lastkraftwagen, mit an dessen Außenseite wenigstens im Teilbereich vorgesehenen Stegen (7), die zur Festlegung eines mit dem Fahrzeug verbindbaren, verstellbaren Kupplungsglieds eine hinterschnittene Nut (8) einschließen, dadurch gekennzeichnet, daß der Kotflügel (1) und die Stege (7) aus gleichem Material bestehen, zusammen einstückig erstellt und die Stege (7) doppelwandig ausgebildet sind.

2. Kotflügel nach Anspruch 1, dadurch gekennzeichnet, daß die Stege (7) mit gerundeten Übergängen (9) am Kotflügel (1) eingeformt sind.

3. Kotflügel nach Anspruch 1 oder 2, dadurch gekennzeichnet, daß die Stege (7) am Kotflügel (1) außenseitig herausgezogen sind.

4. Kotflügel nach Anspruch 1, dadurch gekennzeichnet, daß die Wände (14, 15) der Stege (7) einen Hohlraum (17) einschließen.

5. Kotflügel nach mindestens einem der Ansprüche 1 bis 4, dadurch gekennzeichnet, daß die Stege (7) oder deren Wände (14, 15) und der Kotflügel (1) eine annähernd gleiche Wandstärke (d) aufweisen.

6. Kotflügel nach mindestens einem der Ansprüche 1 bis 5, dadurch gekennzeichnet, daß die Stege (7) und der Kotflügel (1) aus gesintertem Kunststoffpulver, vorzugsweise aus Polvethylenpulver erstellt sind.

## Claims

1. Mudguard made of plastic for a vehicle, especially a truck, having webs (7) which are provided on its outside, at least in a subregion, and enclose an undercut groove (8) for fixing an adjustable coupling element which can be connected to the vehicle, characterized in that the mudguard (1) and the webs (7) consist of the same material, are produced together in one piece, and the webs (7) are of a double-walled design.

2. Mudguard according to Claim 1, characterized in that the webs (7) are moulded-in on the mudguard (1) with rounded transitions (9).

3. Mudguard according to Claim 1 or 2, characterized in that the webs (7) are drawn out on the outside of the mudguard (1).

4. Mudguard according to Claim 1, characterized in that the walls (14, 15) of the webs (7) enclose a cavity (17).

5. Mudguard according to at least one of Claims 1 to 4, characterized in that the webs (7), or their walls (14, 15), and the mudguard (1) have approximately the same wall thickness (d).

6. Mudguard according to at least one of Claims 1 to 5, characterized in that the webs (7) and the mudguard (1) are produced from sintered polymer powder, preferably from polyethylene powder.

## Revendications

1. Garde-boue en plastique pour véhicule, en particulier pour camion, comportant au moins sur une partie de sa face extérieure des nervures (7) entre lesquelles se trouve, pour la fixation d'un élément d'accouplement réglable pouvant être joint au véhicule, une rainure en contre-dépouille (8), caractérisé par le fait que le garde-boue (1) et les nervures (7) sont constitués de la même matière et réalisés ensemble d'une seule pièce et les nervures (7) sont à double paroi.

2. Garde-boue selon la revendication 1, caractérisé par le fait que les nervures (7) se raccordent au garde-boue (1) par des arrondis (9).

3. Garde-boue selon l'une des revendications 1 et 2, caractérisé par le fait que les nervures (7) sont en saillie sur le côté extérieur du garde-boue (1).

4. Garde-boue selon la revendication 1, caractérisé par le fait que les parois (14, 15) des nervures (7) entourent une cavité (17).

5. Garde-boue selon au moins une des revendications 1 à 4, caractérisé par le fait que les nervures (7) ou leurs parois (14, 15) et le garde-boue (1) ont une épaisseur (d) à peu près égale.

6. Garde-boue selon au moins une des revendications 1 à 5, caractérisé par le fait que les nervures (7) et le garde-boue (1) sont réalisés à partir de poudre de plastique frittée, de préférence à partir de poudre de polyéthylène.
